# EUROPÄISCHE PATENTSCHRIFT

(11) **EP 3 329 470 B1**
(45) Veröffentlichungstag und Bekanntmachung des Hinweises auf die Patenterteilung: **07.07.2021**
(21) Anmeldenummer: 16725854.0
(22) Anmeldetag: 30.05.2016
(51) Int. Cl.: G07C 5/08, G06F 9/445

(54) **VERFAHREN UND VORRICHTUNG ZUM AUSTAUSCH VON DATEN MIT DER STEUERELEKTRONIK EINES KRAFTFAHRZEUGS**
METHOD AND DEVICE FOR EXCHANGING DATA USING THE CONTROL DEVICE OF A MOTOR VEHICLE
PROCÉDÉ ET DISPOSITIF PERMETTANT L'ÉCHANGE DE DONNÉES AVEC L'ÉLECTRONIQUE DE COMMANDE D'UN VÉHICULE À MOTEUR

(30) Priorität: 30.07.2015 DE 102015214518
(43) Veröffentlichungstag der Anmeldung: 06.06.2018
(73) Patentinhaber: Robert Bosch GmbH, 70442 Stuttgart (DE)
(72) Erfinder: RITTER, Claus, 76337 Waldbronn (DE); GEBAUER, Carsten, 71034 Boeblingen (DE); DOEHREN, Stefan, 73630 Remshalden-Grunbach (DE); HEYL, Andreas, Palo Alto, 943041223 (US); KRISO, Stefan, 71739 Oberriexingen (DE)
(86) Internationale Anmeldenummer: PCT/EP2016/062159
(87) Internationale Veröffentlichungsnummer: WO 2017/016708

(56) Entgegenhaltungen:
- EP-A2- 0 989 525
- US-A1- 2004 002 793
- US-A1- 2011 012 720
- US-A1- 2015 019 266

## Beschreibung

Die Erfindung betrifft ein Verfahren und eine Vorrichtung zum Austauschen von Daten mit der Steuerelektronik eines Kraftfahrzeugs.

Insbesondere durch die fortschreitende Vernetzung von Kraftfahrzeugen über das Internet werden zunehmend neue Anwendungen geschaffen, für die eine immer größere Menge an Informationen aus dem Kraftfahrzeug, insbesondere seiner Steuerelektronik, erforderlich ist.

Als generischer, herstellerübergreifender Datenzugriffspunkt bietet sich die für abgasrelevante Systeme gesetzlich vorgeschriebene OBD2-Schnittstelle an.

Diese Schnittstelle kann als Diagnosezugriffspunkt verwendet werden, um im Fahrbetrieb und/oder im Stillstand des Kraftfahrzeugs Daten (wie z. B. den aktuellen Kilometerstand) aus dem Kraftfahrzeug auszulesen und, beispielsweise über das Mobilfunknetz, zur weiteren Verarbeitung, Speicherung und/oder Visualisierung weiterzuleiten. Ein möglicher Anwendungsfall ist ein vollautomatisches Fahrtenbuch.

Eine solche, beispielsweise an der OBD2-Schnittstelle betriebene Vorrichtung, die im Fahrbetrieb und/oder im Stillstand des Kraftfahrzeugs Daten aus der Steuerelektronik des Kraftfahrzeugs liest und/oder Befehle an die Steuerelektronik gibt, wird auch als "Aftermarket-Dongle" bezeichnet.

Beim Auslesen trivialer Informationen, wie z. B. des aktuellen Kilometerstandes, aus dem Kraftfahrzeug müssen keine besonderen Sicherheitsbetrachtungen durchgeführt werden.

Eine unbeabsichtigte und/oder fehlerhafte, z. B. durch eine Fehlfunktion der Software oder eine Fehlbedienung eines Benutzers verursachte, Ansteuerung Steuerelektronik, beispielsweise eines ESP-Systems, das u.a. Einfluss auf die Bremse hat, ist dagegen in einer Fahrsituation sehr gefährlich.

Bei komplexeren Anwendungen sind daher höhere Sicherheitsniveaus, wie sie beispielsweise als "ASIL-Level" in der ISO26262 definiert sind, erforderlich. Die Kommunikation mit der Kraftfahrzeugelektronik muss dann technisch dementsprechend abgesichert werden.

Es gibt daher Anwendungsbereiche, in denen es wünschenswert ist, die Kommunikation von "Aftermarket-Dongles" derart abzusichern, das eine Kommunikation zwischen dem Kraftfahrzeug und dem "Aftermarket-Dongle" nur möglich ist, wenn das Kraftfahrzeug still steht.

In dem Dokument US 2004/002793 A1 ist eine Speicherumschreibvorrichtung gezeigt, welche Steuerprogramme für eine fahrzeugmontierte ECU durch Kommunikation zuverlässig und einfach umschreiben kann.

In dem Dokument EP 0 989 525 A2 ist Baumaschine beschrieben, welche eine Verwaltungsvorrichtung zum Durchführen des Sendens und Empfangens von Informationen mit der Baumaschine über einen Kommunikationssatelliten und eine Basisstation.

Ein erfindungsgemäßes Verfahren zum Übertragen von Daten zwischen der Steuerelektronik eines Kraftfahrzeugs und einer Kommunikationsvorrichtung wird zur Lösung der gestellten Aufgabe gemäß Anspruch 1 vorgeschlagen.

Des Weiteren wird eine Kommunikationsvorrichtung gemäß Anspruch 5 vorgeschlagen.

Zum Austausch von Daten ist die Kommunikationsvorrichtung fest, insbesondere über eine Kabelverbindung, mit der Steuerelektronik verbunden. Die Kommunikationsvorrichtung bewegt sich daher zwangsweise gemeinsam mit dem Kraftfahrzeug. Gemäß Ausführungsbeispielen der Erfindung findet ein Datenaustausch (Datenkommunikation) zwischen der Kommunikationsvorrichtung und dem Kraftfahrzeug nur statt, wenn und solange sich die Kommunikationsvorrichtung und damit auch das Kraftfahrzeug im Stillstand befinden. Sicherheitsprobleme, die sich aus dem Austausch von Daten im Fahrbetrieb des Kraftfahrzeugs ergeben können, wie z.B. eine Fehlfunktion oder eine Fehlansteuerung der Bremsen des Kraftfahrzeugs, können so zuverlässig vermieden werden.

In der erfindungsgemäßen Ausführungsform erfolgt das Bestimmen des Bewegungszustandes der Kommunikationsvorrichtung mit Hilfe wenigstens eines in der Kommunikationsvorrichtung angeordneten Sensors, der es ermöglicht, den Bewegungszustand der Kommunikationsvorrichtung und damit des Kraftfahrzeugs zu bestimmen. In der erfindungsgemäßen Ausführungsform umfasst die Kommunikationsvorrichtung wenigstens einen Beschleunigungssensor, der es ermöglicht, den aktuellen Bewegungszustand autonom zu bestimmen, ohne auf externe Datenquellen zugreifen zu müssen.

Durch Auswerten der Signale wenigstens eines in der Kommunikationsvorrichtung vorgesehenen Sensors ist es nicht notwendig, dass im Kraftfahrzeug Bewegungssensoren (z. B. Radsensoren) vorhanden sind und dass diese kraftfahrzeugseitigen Bewegungssensoren mit der Kommunikationsvorrichtung kommunizieren können. Es ist daher nicht notwendig, Übertragungsprotokolle zum Austausch von Daten zwischen der Kommunikationsvorrichtung und fahrzeugseitigen Bewegungssensoren vorzusehen, die herstellerspezifisch angepasst sind.

In einer bevorzugten Ausführungsform umfasst das Bestimmen des Bewegungszustandes, die aktuelle Position der Kommunikationsvorrichtung bzw. des Kraftfahrzeugs zu ermitteln und Änderungen der Position der Kommunikationsvorrichtung bzw. des Kraftfahrzeugs zu bestimmen. Auf diese Weise kann der Bewegungszustand der Kommunikationsvorrichtung und damit des Kraftfahrzeugs zuverlässig bestimmt werden.

In einer bevorzugten Ausführungsform umfasst das Bestimmen der aktuellen Position insbesondere Positionsdaten von Satelliten, insbesondere GPS-Daten, zu empfangen und auszuwerten, um die aktuelle Position zu bestimmen. Mit Hilfe von Satelliten empfangener Positionsdaten sind die aktuelle Position und insbesondere Positionsänderungen der Kommunikationsvorrichtung und damit des Kraftfahrzeugs zuverlässig mit hoher Genauigkeit bestimmbar.

Die Auswertung der von wenigstens einem Beschleunigungssensor zur Verfügung gestellten Daten kann alternativ oder zusätzlich zur Auswertung von (Satelliten-)Positionsdaten erfolgen.

In einer Ausführungsform umfasst das Verfahren, Daten über eine OBD2-Schnittstelle zwischen der Kommunikationsvorrichtung und der Steuerelektronik des Kraftfahrzeugs zu übertragen. Auf diese Weise können die Daten herstellerunabhängig zwischen der Kommunikationsvorrichtung und der Steuerelektronik eines Kraftfahrzeugs übertragen werden.

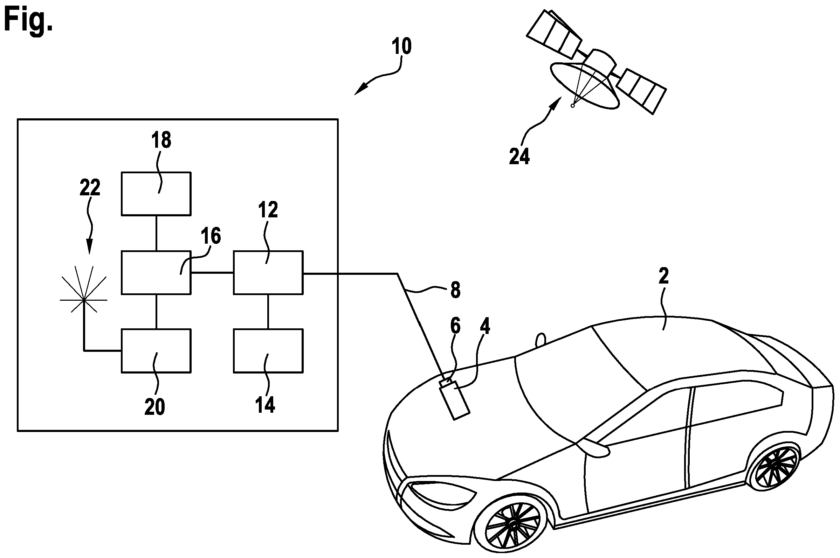

Ein Ausführungsbeispiel der Erfindung wird im Folgenden anhand der beigefügten Figur beschrieben:

### Figurenbeschreibung

Die Figur zeigt in einer schematischen Darstellung ein Ausführungsbeispiel einer Kommunikationsvorrichtung 10, die über ein, in der Regel mehrpoliges, Datenkabel 8 mit der Steuerelektronik 4 eines Kraftfahrzeugs 2 verbunden ist. Die Steuerelektronik 4 weist zur Datenübertragung insbesondere eine OBD2-Schnittstelle 6 auf. Alternativ kann die Datenübertragung zwischen der Kommunikationsvorrichtung 10 und der Steuerelektronik 4 des Kraftfahrzeugs 2 auch über eine andere geeignete Schnittstelle 6 erfolgen.

Die Kommunikationsvorrichtung 10 ist in der Figur aus Gründen der besseren Darstellbarkeit außerhalb des Kraftfahrzeugs 2 gezeigt. Die Kommunikationsvorrichtung 10 kann im Betrieb jedoch im Kraftfahrzeug 2, beispielsweise im/am Motor-, Koffer- oder Fahrgastraum des Kraftfahrzeugs 2 angeordnet sein. Auf die Weise kann das Datenkabel 8 möglichst kurz ausgebildet sein. Die Kommunikationsvorrichtung 10 kann im Betrieb auch fest aber lösbar, z.B. durch eine Schraub-, Klebe- oder Klettverbindung mit dem Kraftfahrzeug 2 verbunden sein.

Die Kommunikationsvorrichtung 10 umfasst eine Sende- und Empfangsvorrichtung 12, die zur Datenkommunikation mit der Steuerelektronik 4 des Kraftfahrzeugs 2 ausgebildet ist, und eine Steuervorrichtung 14, die Daten von der Steuerelektronik 4 des Kraftfahrzeugs 2 anfordert oder an diese überträgt.

Die Kommunikationsvorrichtung 10 umfasst darüber hinaus eine Überwachungsvorrichtung 16, die mit einem oder mehreren Sensoren 18, 20 verbunden oder ausgestattet ist. Die Sensoren 18, 20 sind dazu ausgebildet, den aktuellen Bewegungszustand der Kommunikationsvorrichtung 10 zu bestimmen.

Da die Kommunikationsvorrichtung 10 im/am Koffer-, Fahrgast- oder Motorraum des Kraftfahrzeugs 2 angeordnet und/oder mit dem Kraftfahrzeug 2 verbunden ist, stimmt der Bewegungszustand der Kommunikationsvorrichtung 10 mit dem Bewegungszustand des Kraftfahrzeugs 2 überein. Insbesondere kann sich die Kommunikationsvorrichtung 10 nicht im Ruhezustand befinden, wenn sich das Kraftfahrzeug 2 bewegt.

Daher signalisiert der wenigstens eine Sensor 18, 20 der Kommunikationsvorrichtung 10 einen Ruhezustand der Kommunikationsvorrichtung 10 nur, wenn sich auch das Kraftfahrzeug 2 im Ruhezustand befindet und nicht bewegt.

Die Überwachungsvorrichtung 16 lässt einen Austausch von Daten zwischen der Kommunikationsvorrichtung 10 und der Steuerelektronik 4 des Kraftfahrzeugs 2 nur zu, wenn der wenigstens eine Sensor 18, 20 signalisiert, dass sich die Kommunikationsvorrichtung 10 und damit auch das Kraftfahrzeug 2 nicht bewegen, sondern im Stillstand befinden.

Auf diese Weise wird ein potentiell sicherheitsrelevanter Austausch von Daten zwischen der Kommunikationsvorrichtung 10 und dem Kraftfahrzeug 2 sicher verhindert, solange das Kraftfahrzeug 2 und mit ihm die Kommunikationsvorrichtung 10 in Bewegung ist.

Insbesondere wird auch eine bereits begonnene Datenübertragung zwischen der Kommunikationsvorrichtung 10 und dem Kraftfahrzeug 2 unterbrochen, sobald wenigstens einer der Sensoren 18, 20 signalisiert, dass sich das Kraftfahrzeug 2 und mit ihm die Kommunikationsvorrichtung 10 in Bewegung gesetzt hat.

Bei wenigstens einem der Sensoren 18, 20 handelt es sich um einen Beschleunigungssensor 18, der in der Lage ist, Beschleunigungen des Kraftfahrzeugs 2 autonom, d.h. ohne auf zusätzliche Informationen, die "von außen" geliefert werden, angewiesen zu sein, zu detektieren. Solche autonomen Sensoren 18 sind besonders zuverlässig, da sie unabhängig von äußeren Einflüssen tätig sind.

Die Sensoren 18, 20 können auch wenigstens einen Positionssensor 20 umfassen, der in der Lage ist, die aktuelle Position der Kommunikationsvorrichtung 10 und damit des Kraftfahrzeugs 2, z.B. auf der Grundlage von über eine Antenne 22 von einem oder mehreren Satelliten 24 empfangenen Positionsdaten, zu bestimmen und aus der Änderung der aktuellen Position der Kommunikationsvorrichtung 10 über die Zeit auf den Bewegungszustand des Kraftfahrzeugs 2 zu schließen.

Durch den Empfang von Satellitenpositionsdaten, beispielsweise GPS-Daten, können die aktuelle Position und damit auch der aktuelle Bewegungszustand der Kommunikationsvorrichtung 10 und damit des Kraftfahrzeugs 2 zuverlässig und mit hoher Genauigkeit bestimmt werden.

Verschiedene Typen von Bewegungssensoren 18, 20, z.B. Beschleunigungssensoren 18 und satellitengestützte Sensoren 20, können alternativ oder kumulativ vorgesehen sein, um die Betriebssicherheit der Überwachungsvorrichtung 16 zu erhöhen.

## Patentansprüche

1. Verfahren zum Übertragen von Daten zwischen der Steuerelektronik (4) eines Kraftfahrzeugs (2) und einer Kommunikationsvorrichtung (10), wobei das Verfahren umfasst,
den aktuellen Bewegungszustand der Kommunikationsvorrichtung (10) zu bestimmen; und
das Übertragen von Daten zwischen der Steuerelektronik (4) des Kraftfahrzeugs (2) und der Kommunikationsvorrichtung (10) nur zuzulassen, wenn das Bestimmen des aktuellen Bewegungszustandes der Kommunikationsvorrichtung (10) ergibt, dass sich die Kommunikationsvorrichtung (10) in einem Ruhezustand befindet, wobei das Verfahren weiterhin umfasst die Kommunikationsvorrichtung fest, insbesondere über eine Kabelverbindung, mit der Steuerelektronik (4) des Kraftfahrzeuges (2) zu verbinden, so dass der Bewegungszustand der Kommunikationsvorrichtung (10) mit dem Bewegungszustand des Kraftfahrzeugs (2) übereinstimmt, wobei das Bestimmen des Bewegungszustandes der Kommunikationsvorrichtung (10) umfasst, Beschleunigungen der Kommunikationsvorrichtung (10) mit einen Beschleunigungssensor (18) zu detektieren.

2. Verfahren nach Anspruch 1, wobei das Bestimmen des Bewegungszustandes der Kommunikationsvorrichtung (10) umfasst, die aktuelle Position der Kommunikationsvorrichtung (10) zu ermitteln und Änderungen der Position der Kommunikationsvorrichtung (10) über die Zeit zu bestimmen.

3. Verfahren nach Anspruch 2, wobei das Bestimmen der aktuellen Position der Kommunikationsvorrichtung (10) umfasst, Positionsdaten von wenigstens einem Satelliten (24) zu empfangen und auszuwerten.

4. Verfahren nach einem der Ansprüche 1 bis 3, wobei das Verfahren umfasst, Daten über eine OBD2-Schnittstelle (6) zwischen der Kommunikationsvorrichtung (10) und der Steuerelektronik (4) des Kraftfahrzeugs (2) zu übertragen.

5. Kommunikationsvorrichtung (10), die ausgebildet ist, Daten mit der Steuerelektronik (4) eines Kraftfahrzeugs (2) auszutauschen, wobei die Kommunikationsvorrichtung (10) eine Überwachungsvorrichtung (16) umfasst, die ausgebildet ist:
den aktuellen Bewegungszustand der Kommunikationsvorrichtung (10) zu bestimmen; und
das Übertragen von Daten zwischen der Steuerelektronik (4) des Kraftfahrzeugs (2) und der Kommunikationsvorrichtung (10) nur zuzulassen, wenn das Bestimmen des aktuellen Bewegungszustandes der Kommunikationsvorrichtung (10) ergibt, dass sich die Kommunikationsvorrichtung (10) in einem Ruhezustand befindet,
wobei die Kommunikationsvorrichtung (10) derart ausgebildet ist, dass sie fest, insbesondere über eine Kabelverbindung, mit der Steuerelektronik (4) des Kraftfahrzeuges (2) verbindbar ist, so dass der Bewegungszustand der Kommunikationsvorrichtung (10) mit dem Bewegungszustand des Kraftfahrzeugs (2) übereinstimmt, wobei die Kommunikationsvorrichtung (10) mit wenigstens einem Sensor (18, 20), der ausgebildet ist, den aktuellen Bewegungszustand der Kommunikationsvorrichtung (10) zu bestimmen, wobei der wenigstens eine Sensor (18, 20) einen Beschleunigungssensor (18) umfasst.

6. Kommunikationsvorrichtung (10) nach Anspruch 5, wobei die Kommunikationsvorrichtung (10) zur Datenübertragung über eine OBD2-Schnittstelle ausgebildet ist.

7. Kommunikationsvorrichtung (10) nach einem der Ansprüche 5 bis 6, wobei die Überwachungsvorrichtung (14) ausgebildet ist, die aktuelle Position der Kommunikationsvorrichtung (10) und insbesondere Änderungen der Position der Kommunikationsvorrichtung (10) zu bestimmen, um den aktuellen Bewegungszustand der Kommunikationsvorrichtung (10) zu ermitteln.

8. Kommunikationsvorrichtung (10) nach Anspruch 7, wobei die Überwachungsvorrichtung (14) ausgebildet ist, Daten eines satellitengestützten Navigationssystems zu empfangen und auszuwerten, um die aktuelle Position der Kommunikationsvorrichtung (10) zu bestimmen.

## Claims

1. Method for transmitting data between the control electronics (4) of a motor vehicle (2) and a communication apparatus (10), wherein the method comprises
determining the current state of movement of the communication apparatus (10); and
permitting the transmission of data between the control electronics (4) of the motor vehicle (2) and the communication apparatus (10) only when the determination of the current state of movement of the communication apparatus (10) reveals that the communication apparatus (10) is in a quiescent state,
wherein the method also comprises permanently connecting the communication apparatus to the control electronics (4) of the motor vehicle (2), in particular via a cable connection, with the result that the state of movement of the communication apparatus (10) corresponds to the state of movement of the motor vehicle (2), wherein the determination of the state of movement of the communication apparatus (10) comprises detecting accelerations of the communication apparatus (10) using an acceleration sensor (18).

2. Method according to Claim 1, wherein the determination of the state of movement of the communication apparatus (10) comprises determining the current position of the communication apparatus (10) and determining changes in the position of the communication apparatus (10) over time.

3. Method according to Claim 2, wherein the determination of the current position of the communication apparatus (10) comprises receiving and evaluating position data from at least one satellite (24) .

4. Method according to one of Claims 1 to 3, wherein the method comprises transmitting data between the communication apparatus (10) and the control electronics (4) of the motor vehicle (2) via an OBD2 interface (6).

5. Communication apparatus (10) which is designed to interchange data with the control electronics (4) of a motor vehicle (2), wherein the communication apparatus (10) comprises a monitoring apparatus (16) which is designed:
to determine the current state of movement of the communication apparatus (10); and
to permit the transmission of data between the control electronics (4) of the motor vehicle (2) and the communication apparatus (10) only when the determination of the current state of movement of the communication apparatus (10) reveals that the communication apparatus (10) is in a quiescent state,
wherein the communication apparatus (10) is designed in such a manner that it can be permanently connected to the control electronics (4) of the motor vehicle (2), in particular via a cable connection, with the result that the state of movement of the communication apparatus (10) corresponds to the state of movement of the motor vehicle (2), wherein the communication apparatus (10) having at least one sensor (18, 20) which is designed to determine the current state of movement of the communication apparatus (10), wherein the at least one sensor (18, 20) comprises an acceleration sensor (18).

6. Communication apparatus (10) according to Claim 5, wherein the communication apparatus (10) is designed to transmit data via an OBD2 interface.

7. Communication apparatus (10) according to one of Claims 5 to 6, wherein the monitoring apparatus (14) is designed to determine the current position of the communication apparatus (10) and, in particular, changes in the position of the communication apparatus (10) in order to determine the current state of movement of the communication apparatus (10) .

8. Communication apparatus (10) according to Claim 7, wherein the monitoring apparatus (14) is designed to receive and evaluate data from a satellite-based navigation system in order to determine the current position of the communication apparatus (10).

## Revendications

1. Procédé de transmission de données entre l'électronique de commande (4) d'un véhicule automobile (2) et un dispositif de communication (10), le procédé comprenant les étapes suivantes
déterminer l'état de mouvement actuel du dispositif de communication (10) ; et
permettre la transmission de données entre l'électronique de commande (4) du véhicule automobile (2) et le dispositif de communication (10) uniquement si la détermination de l'état de mouvement actuel du dispositif de communication (10) montre que le dispositif de communication (10) est dans un état de repos,
le procédé comprenant en outre la liaison fixe du dispositif de communication, notamment par le biais d'une liaison par câble, à l'électronique de commande (4) du véhicule automobile (2) de manière que l'état de mouvement du dispositif de communication (10) corresponde à l'état de mouvement du véhicule automobile (2), la détermination de l'état de mouvement du dispositif de communication (10) comprenant la détection d'accélérations du dispositif de communication (10) à l'aide d'un capteur d'accélération (18) .

2. Procédé selon la revendication 1, la détermination de l'état de mouvement du dispositif de communication (10) comprenant la détermination de la position actuelle du dispositif de communication (10) et la détermination des variations de la position du dispositif de communication (10) au cours du temps.

3. Procédé selon la revendication 2, la détermination de la position actuelle du dispositif de communication (10) comprenant la réception et l'évaluation de données de position par au moins un satellite (24).

4. Procédé selon l'une des revendications 1 à 3, le procédé comprenant la transmission de données par le biais d'une interface OBD2 (6) entre le dispositif de communication (10) et l'électronique de commande (4) du véhicule automobile (2).

5. Dispositif de communication (10) qui est conçu pour échanger des données avec l'électronique de commande (4) d'un véhicule automobile (2), le dispositif de communication (10) comprenant un dispositif de surveillance (16) qui est conçu pour :
déterminer l'état de mouvement actuel du dispositif de communication (10) ; et
permettre la transmission de données entre l'électronique de commande (4) du véhicule automobile (2) et le dispositif de communication (10) seulement si la détermination de l'état de mouvement actuel du dispositif de communication (10) montre que le dispositif de communication (10) est dans un état de repos, le dispositif de communication (10) étant conçu de manière à pouvoir être relié de manière fixe à l'électronique de commande (4) du véhicule automobile (2), notamment par le biais d'une liaison par câble, de sorte que l'état de mouvement du dispositif de communication (10) corresponde à l'état de mouvement du véhicule automobile (2), dans lequel le dispositif de communication (10) comprenant au moins un capteur (18, 20) qui est conçu pour déterminer l'état de mouvement actuel du dispositif de communication (10),
l'au moins un capteur (18, 20) comprenant un capteur d'accélération (18).

6. Dispositif de communication (10) selon la revendication 5, le dispositif de communication (10) étant conçu pour transmettre des données par le biais d'une interface OBD2.

7. Dispositif de communication (10) selon l'une des revendications 5 et 6, le dispositif de surveillance (14) étant conçu pour déterminer la position actuelle du dispositif de communication (10) et notamment des variations de position du dispositif de communication (10) afin de déterminer l'état de déplacement actuel du dispositif de communication (10).

8. Dispositif de communication (10) selon la revendication 7, le dispositif de surveillance (14) étant conçu pour recevoir et évaluer des données d'un système de navigation par satellite afin de déterminer la position actuelle du dispositif de communication (10) .
